# EUROPÄISCHE PATENTSCHRIFT

(11) **EP 4 125 165 B1**
(45) Veröffentlichungstag und Bekanntmachung des Hinweises auf die Patenterteilung: **01.11.2023**
(21) Anmeldenummer: 21188167.7
(22) Anmeldetag: 28.07.2021
(51) Int. Cl.: H01S 3/00, H01S 3/23, H05G 2/00

(54) **FOKUSSIEREINRICHTUNG MIT EINER PARALLEL ODER DECKUNGSGLEICH ZU EINER TARGETEBENE VERLAUFENDEN BILDEBENE**
FOCUSING DEVICE WITH AN IMAGE PLANE EXTENDING PARALLEL OR CONGRUENT WITH A TARGET PLANE
DISPOSITIF DE MISE AU POINT DOTÉ D'UN PLAN IMAGE S'ÉTENDANT PARALLÈLE OU CONTINU PAR RAPPORT À UN PLAN CIBLE

(43) Veröffentlichungstag der Anmeldung: 01.02.2023
(73) Patentinhaber: TRUMPF Lasersystems for Semiconductor Manufacturing GmbH, 71254 Ditzingen (DE)
(72) Erfinder: REGAARD, Boris, Dr., 70499 Stuttgart (DE)
(74) Vertreter: Kohler Schmid Möbus Patentanwälte

(56) Entgegenhaltungen:
- WO-A1-2019/192841
- US-A1- 2012 241 649
- US-A1- 2012 307 851

## Beschreibung

### Hintergrund der Erfindung

Die Erfindung betrifft eine Fokussiereinrichtung zur Fokussierung von mindestens zwei Laserstrahlen auf ein sich in einem Zielbereich bewegendes Targetmaterial, insbesondere zur Erzeugung von EUV (extrem ultravioletter)-Strahlung, vorzugsweise zur Lithographie, wobei die Fokussiereinrichtung Folgendes aufweist:
a) Ein erstes fokussierendes Element zur Fokussierung eines ersten Laserstrahls auf das Targetmaterial an einer ersten Position im Zielbereich;
b) ein zweites fokussierendes Element zur Fokussierung eines zweiten Laserstrahls auf das Targetmaterial an einer zweiten Position im Zielbereich.

Die Erfindung betrifft weiterhin eine EUV-Strahlerzeugungsvorrichtung mit einer solchen Fokussiereinrichtung.

Eine solche Fokussiereinrichtung und eine solche EUV-Strahlerzeugungsvorrichtung sind der Anmelderin bekannt. Es kann sich jedoch dabei um internen, unveröffentlichten Stand der Technik handeln. aus der WO 2015/036024 A1, der WO 2015/036025 A1 und der WO 2019/192841 A1 bekannt geworden.

Nachteilig an diesen Fokussiereinrichtungen bzw. Strahlerzeugungsvorrichtungen ist, dass durch eine Fokussierung der jeweiligen Laserstrahlen auf das Targetmaterial an unterschiedlichen Positionen im Zielbereich aus jeweils unterschiedlichen Richtungen die Effizienz der Targetbestrahlung verringert wird.

### Aufgabe der Erfindung

Es ist daher Aufgabe der Erfindung, eine Fokussiereinrichtung und eine EUV-Strahlerzeugungsvorrichtung bereit zu stellen, die eine signifikant effizientere Bestrahlung des Targetmaterials ermöglicht.

### Beschreibung der Erfindung

Diese Aufgabe wird erfindungsgemäß gelöst durch eine Fokussiereinrichtung gemäß Patentanspruch 1 und eine EUV-Strahlerzeugungsvorrichtung nach Patentanspruch 7.

Die Unteransprüche geben bevorzugte Weiterbildungen wieder.

Die Aufgabe wird somit gelöst durch eine eingangs beschriebene Fokussiereinrichtung, gekennzeichnet durch das folgende Merkmal:
c) parallele oder gleiche, insbesondere bis auf ±4°, vorzugsweise bis auf ±2°, parallele oder gleiche, optische Achsen der beiden fokussierenden Elemente.

Hierdurch ergeben sich parallele oder deckungsgleiche Bildebenen für die beiden fokussierenden Elemente. Insbesondere kann sich das Targetmaterial in einer Ebene, welche parallel oder deckungsgleich mit einer der Bildebenen der beiden fokussierenden Elemente ist, bewegen (Targetebene). Das Targetmaterial ist hierdurch besonders effektiv bestrahlbar.

Mit anderen Worten wird erfindungsgemäß vorgeschlagen, dass die optischen Achsen der fokussierenden Elemente parallel zueinander oder gleich sind. Insbesondere steht mindestens eine, vorzugsweise beide optischen Achsen der beiden fokussierenden Elemente senkrecht zu einer Flugrichtung bzw. Flugbahn des Targetmaterials, wobei sich das Targetmaterial von einer ersten Position zu einer zweiten Position im Zielbereich bewegt. Die Hauptachsen der Laserstrahlen sind dabei jeweils parallel versetzt oder verkippt zu den optischen Achsen der fokussierenden Elemente sein. Bei einer "klassischen" Abbildung ist die optische Achse demgegenüber koaxial zur Hauptachse des Laserstrahls. Dadurch müssen die beiden optischen Achsen zueinander verkippt sein, um im Nahfeld die Laserstrahlen örtlich zu trennen und im Fernfeld übereinanderzulegen.

Das erste fokussierende Element kann in Form einer Elementgruppe ausgebildet sein. Alternativ oder zusätzlich dazu kann das zweite fokussierende Element in Form einer Elementgruppe ausgebildet sein.

Der erste Laserstrahl kann auf einem ersten Strahlweg der Fokussiereinrichtung in den Zielbereich geführt werden. Der zweite Laserstrahl kann auf einem zweiten Strahlweg der Fokussiereinrichtung in den Zielbereich geführt werden.

Die Hauptachse des ersten Strahlwegs verläuft vorzugsweise nicht koaxial zur optischen Achse des ersten fokussierenden Elements. Die Hauptachse des zweiten Strahlwegs verläuft vorzugsweise nicht koaxial zur optischen Achse des zweiten fokussierenden Elements.

Die jeweiligen Hauptachsen der Strahlwege bzw. Laserstrahlen können vor den fokussierenden Elementen kollimiert und kolinear sein. In einer möglichen alternativen Ausgestaltung können die einzelnen kollimierten Laserstrahlen auch nicht parallel zueinander angeordnet sein. In diesem Fall sind die fokussierenden Elemente bzw. deren Hauptebenen vorzugsweise gemäß der Scheimpflugbedingung relativ einer Ebene senkrecht zur Hauptachse des Laserstrahls bzw. Strahlwegs verkippt, um die Schärfeebene in der Ebene auszurichten, in der sich das Targetmaterial bewegt.

Das Targetmaterial ist vorzugsweise in Form eines Zinntröpfchens ausgebildet. In dem Zinntröpfchen kann durch die Bestrahlung mit Laserstrahlung ein Plasma generiert werden, das EUV-Strahlung emittiert.

Die Hauptachse des ersten Strahlwegs und/oder die Hauptachse des zweiten Strahlwegs, insbesondere parallel, versetzt zur optischen Achse des jeweiligen fokussierenden Elements. Ein fokussierendes Element oder beide fokussierenden Elemente ist/sind dadurch rotationsunsymmetrisch zu ihren jeweiligen optischen Achsen ausgebildet. Hierdurch kann eine verzerrungsfreie Projektion in der Bildebene erreicht werden. Beispielsweise kann ein im Querschnitt kreisrunder Laserstrahl bzw. können im Querschnitt kreisrunde Laserstrahlen eine kreisrunde Projektion aufweisen.

Besonders bevorzugt ist zumindest ein fokussierendes Element in Form eines Ausschnitts eines rotationssymmetrischen fokussierenden Elements ausgebildet. Hierdurch wird die Fokussiereinrichtung konstruktiv besonders einfach ausgebildet und die Strahlwege sind verhältnismäßig leicht berechenbar.

Wenn die Hauptachsen der Strahlwege versetzt sind, kann ein sich bewegendes Targetmaterial zeitlich versetzt durch die beiden Laserstrahlen bestrahlt werden. Mit anderen Worten kann ein sich bewegendes Targetmaterial zeitlich (und somit auch örtlich) versetzt getroffen werden, indem die optischen Achsen parallel zueinander verschoben werden, sodass jede optische Achse durch das jeweilige Targetmaterial geht. Die optischen Achsen der fokussierenden Elemente sind vorzugsweise weniger als 3mm, insbesondere weniger als 1mm, zueinander versetzt.

Weiter bevorzugt kann zumindest ein fokussierendes Element, insbesondere können beide strahlformende Elemente, in Form einer Linse oder eines Spiegels ausgebildet sein. Im Falle eines Spiegels kann insbesondere ein Off-Axis-Parabolspiegel oder eine Kombination aus Off-Axis-Parabolspiegel und Off-Axis-Ellipsoidspiegel eingesetzt werden.

Das erste strahlformende Element und/oder das zweite strahlformende Element kann/können innerhalb einer Vakuumkammer angeordnet sein. Die Vakuumkammer kann eine erste Öffnung zum Eintritt des ersten Laserstrahls in die Vakuumkammer und/oder eine zweite Öffnung zum Eintritt des zweiten Laserstrahls in die Vakuumkammer aufweisen.

Im ersten Strahlweg und/oder im zweiten Strahlweg kann/können ein Umlenkspiegel, insbesondere eine Doppelspiegelanordnung, vorgesehen sein. Die Doppelspiegelanordnung führt zu eine signifikanten, vorzugsweise sogar vollständigen, Astigmatismusreduktion (vgl. Seunghyuk Chang: Linear astigmatism of confocal off-axis reflectiveimaging systems with N-conic mirrors and its elimination; Journal of the Optical Society of America A, Vol. 32, No. 5 / May 2015, S. 852-859). Bei dieser Anordnung wird der der abzubildenden Laserstrahl entlang seiner Hauptachse jedoch nicht auf einer theoretischen optischen Achse geführt, die zu einer astigmatismusfreien Abbildung führt, sondern ist auf der Eingangsseite (kollimierter Eingangsstrahl) parallel dazu versetzt, um den gewünschten Effekt einer verkippten Hauptachse auf der Ausgangsseite mit zur Targetebene paralleler Fokusebene zu erzielen. Dies entspricht im Ersatzmodell einer Linsenoptik der Verschiebung der Hauptachse des Laserstrahls zur optischen Achse der Linse. Der Winkel der Hauptachseauf der Ausgangsseite entspricht dabei dem Tangens des Abstandes der Hauptachse auf der Eingangsseite dividiert durch die EFL.

Die Fokussiereinrichtung kann einen dritten Strahlweg zur Führung eines dritten Laserstrahls in den Zielbereich aufweisen. Das Targetmaterial kann auf seinem Weg zunächst vom ersten Laserstrahl, anschließend vom dritten Laserstrahl und schließlich vom zweiten Laserstrahl bestrahlt werden. Der dritte Laserstrahl kann in einem Winkel von mehr als 2°, insbesondere von mehr als 4°, zum ersten Laserstrahl auf das erste fokussierende Element treffen. Der dritte Strahlweg weist dadurch ebenfalls eine Bildebene auf, die parallel oder deckungsgleich mit der Bildebene mindestens eines der beiden anderen fokussierenden Elemente bzw. mit der Ebene, in der sich das Targetmaterial bewegt, verläuft. Die Hauptachse des dritten Strahlwegs und damit des driietn Laserstrahls verläuft vorzugsweise nicht koaxial zur optischen Achse des ersten fokussierenden Elements. Alternativ kann der dritte Strahlweg oder weitere Strahlwege auch ein drittes fokussierendes Element und damit eine örtlich getrennte optische Achse aufweisen mit den gleichen Randbedingungen wie die beiden ersten Strahlengängen.

Die erfindungsgemäße Aufgabe wird weiterhin gelöst durch eine EUV-Strahlerzeugungsvorrichtung mit einer Vakuumkammer, in die zur Erzeugung von EUV-Strahlung das Targetmaterial in den Zielbereich einbringbar ist, wobei die EUV-Strahlerzeugungsvorrichtung die hier beschriebene Fokussiereinrichtung aufweist sowie eine erste Strahlquelle zur Erzeugung des ersten Laserstrahls und einer zweiten Strahlquelle zur Erzeugung des zweiten Laserstrahls.

Die Hauptachsen der jeweiligen Laserstrahlen entsprechen dabei vorzugsweise den Hauptachsen der jeweiligen Strahlwege.

Die Laserstrahlen können verschiedene Wellenlängen aufweisen. Insbesondere kann der erste Laserstrahl eine Wellenlänge zwischen 500nm und 1200nm aufweisen und der zweite Laserstrahl kann eine Wellenlänge zwischen 8µm und 12µm aufweisen. Das erste optische Element ist, insbesondere im Fall der genannten Wellenlängen, vorzugsweise in Form einer Linse aus Quarzglas, Borosilikat-Kronglas, Saphirglas oder in Form eines Spiegels aus Aluminium oder Silizium-Carbid oder Kupfer ausgebildet. Das zweite optische Element ist, insbesondere im Fall der genannten Wellenlängen, vorzugsweise in Form einer Linse aus Zinkselenid oder (künstlichem) Diamant oder in Form eines Spiegels aus Kupfer ausgebildet. Die genannten Materialien weisen besonders gute optische Eigenschaften bei guter Bearbeitbarkeit und guter Kühlfähigkeit auf.

In besonders bevorzugter Ausgestaltung der Erfindung ist/sind der erste Laserstrahl und/oder der zweite Laserstrahl gepulst. Hierdurch wird u.a. ermöglicht, dass die in das Targetmaterial eingebrachte Leistung und damit die Leistung der emittierten EUV-Strahlung besonders hoch ist.

Die EUV-Strahlerzeugungsvorrichtung kann eine dritte Strahlquelle zur Erzeugung des dritten Laserstrahls umfassen, wobei die Hauptachse des dritten Laserstrahls vorzugsweise der Hauptachse des dritten Strahlwegs entspricht.

Der dritte Laserstrahl kann gepulst sein. Der gepulste dritte Laserstrahl kann zur Erzeugung eines Zwischenpulses zwischen einem Puls durch den ersten Laserstrahl und einem Puls durch den zweiten Laserstrahl auf das Targetmaterial eingesetzt werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt schematisch eine Fokussiereinrichtung gemäß dem Stand der Tech-nik.
- Fig. 2: zeigt schematisch eine erste Ausführungsform einer erfindungsgemäßen Fokussiereinrichtung.
- Fig. 3: zeigt schematisch eine Ausführungsform einer erfindungsgemäßen EUV-Strahlerzeugungsvorrichtung.

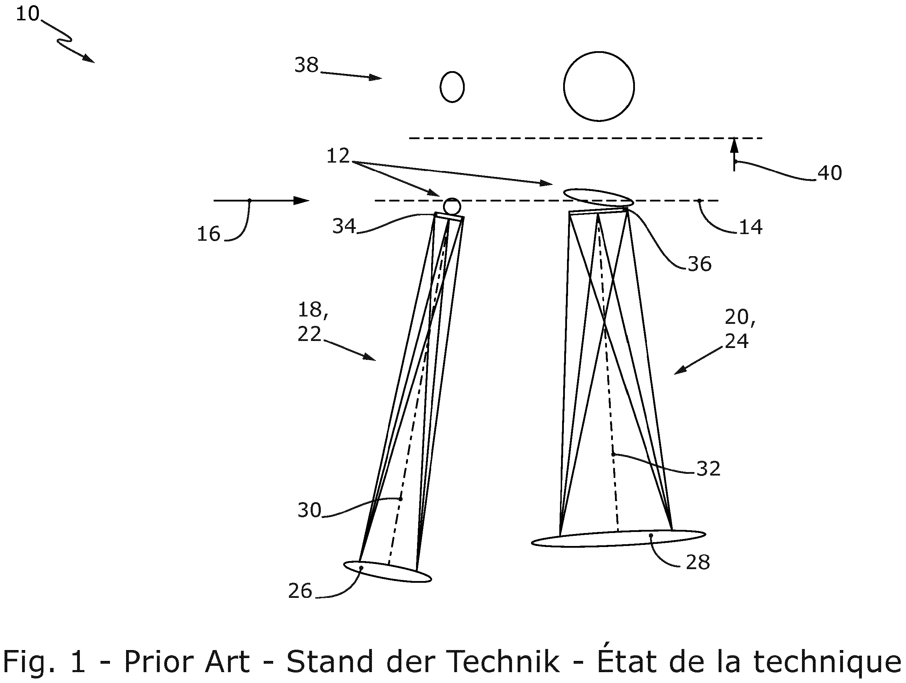

**Fig. 1** zeigt eine Fokussiereinrichtung **10** gemäß dem Stand der Technik. Es handelt sich dabei zwar um Stand der Technik, der der Anmelderin bekannt ist, jedoch nicht notwendigerweise um veröffentlichten Stand der Technik.

Die Fokussiereinrichtung 10 weist ein Targetmaterial **12** auf, das sich in einer Targetebene **14** in Flugrichtung **16** bewegt. Das Targetmaterial 12 wird durch einen ersten Laserstrahl **18** und einen zweiten Laserstrahl **20** bestrahlt. Der erste Laserstrahl 18 wird in einem ersten Strahlweg **22** geführt und der zweite Laserstrahl 20 wird in einem zweiten Strahlweg **24** geführt. Im ersten Strahlweg 22 ist ein erstes fokussierendes Element **26** angeordnet. Im zweiten Strahlweg 24 ist ein zweites fokussierendes Element **28** angeordnet. Die fokussierenden Elemente 26, 28 sind jeweils in Form optisch fokussierender Elemente ausgebildet. Die fokussierenden Elemente 26, 28 können verschiedene Brennweiten aufweisen.

Die fokussierenden Elemente 26, 28 weisen optische Achsen **30, 32** auf, die koaxial zu den Laserstrahlen 18, 20 verlaufen. Die Laserstrahlen 18, 20 sind aufgrund ihrer Wellenlänge und/oder Polarisation nicht überlagerbar. Die optischen Achsen 30, 32 stehen daher in einem Winkel von mehr als 4° zueinander. Hierdurch stehen auch die Fokusebenen **34, 36** in einem Winkel von mehr als 4° zueinander. Dies führt zu verzerrten Abbildungen **38** der Laserstrahlen 18, 20 auf dem Targetmaterial 12 (bei Betrachtung in der Ebene der Flugrichtung). Bei Betrachtung des Targetmaterials 12 in Blickrichtung **40** werden beispielsweise im Querschnitt kreisförmige Laserstrahlen 18, 20 elliptisch abgebildet, wenn das Targetmaterial 12 nicht kugelförmig ist, sondern verformt. Eine Verformung erfolgt dabei insbesondere durch die Bestrahlung. Hierdurch erfolgt eine ineffektive Bestrahlung des Targetmaterials 12.

**Fig**. **2** zeigt eine erste Ausführungsform einer erfindungsgemäßen Fokussiereinrichtung 10. Der Aufbau der Fokussiereinrichtung 10 entspricht bis auf die nachfolgend diskutierten Abweichungen dem Aufbau der bekannten Fokussiereinrichtung 10 gemäß Fig. 1, auf den zur Vermeidung von Wiederholungen Bezug genommen wird.

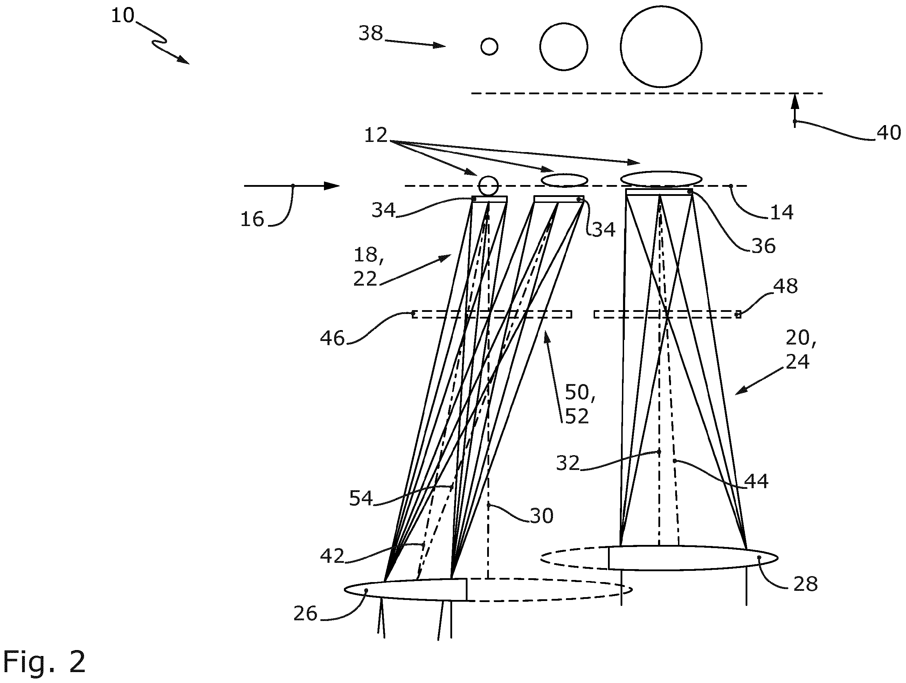

Wie aus Fig. 2 ersichtlich ist, stehen die optischen Achsen 30, 32 parallel zueinander. Hierdurch verlaufen die Fokusebenen 34, 36 der Strahlwege 22, 24 bzw. der Laserstrahlen 18, 20 parallel oder deckungsgleich zueinander und zu einer Ebene, welche die Flugbahn des Targetmaterials umfasst. Die Abbildungen 38 sind unverzerrt, sodass eine effektive Bestrahlung erfolgen kann.

Im vorliegenden Fall sind weiterhin die Hauptachsen **42, 44** der Strahlwege 22, 24 bzw. der Laserstrahlen 18, 20 versetzt zu den optischen Achsen 30, 32. Die fokussierenden Elemente sind 26, 28 sind, wie gestrichelt in Fig. 2 angedeutet, vorzugsweise rotationssymmetrisch zu ihren jeweiligen optischen Achsen 30, 32, aber rotationsunsymmetrisch zu den Hauptachsen 42, 44 ausgebildet.

Die fokussierenden Elemente 26, 28 sind vorzugsweise in Form von optisch fokussierenden Elementen, insbesondere jeweils in Form einer Sammellinse oder eines Sammelspiegels, ausgebildet.

In einem oder beiden Strahlwegen 22, 24 kann/können Umlenkspiegel **46, 48** angeordnet sein, die in Fig. 2 lediglich schematisch angedeutet sind. Derlei Umlenkspiegel 46, 48 beeinflussen die erfindungsgemäße optische Abbildung nicht. Die Umlenkspiegel 46, 48 können jeweils zumindest paarweise, d.h. jeweils in Form zumindest einer Doppelspiegelanordnung (nicht gezeigt) vorgesehen sein.

Im Ausführungsbeispiel gemäß Fig. 2 wird das Targetmaterial 12 durch einen dritten Laserstrahl **50** bestrahlt, der auf einem dritten Strahlweg **52** mit einer Hauptachse **54** geführt ist. Der dritte Strahlweg 52 geht durch das erste strahlformende Element 26. Die Hauptachse 54 des dritten Strahlwegs 52 weist einen Winkel von mehr als 2°, insbesondere von mehr als 4°, zur Hauptachse 42 des ersten Strahlwegs 22 auf.

Das Targetmaterial 12 kann durch die Laserstrahlen 18, 20, 50 teilweise verdampfen. Hierdurch kann die Bewegung des Targetmaterials 12 in manchen Fällen lediglich näherungsweise in der Targetebene 14 erfolgen. Die Abweichungen der Flugbahn des Targetmaterials 12 von der Targetebene 14 sind in den Figuren jedoch schematisch übertrieben dargestellt.

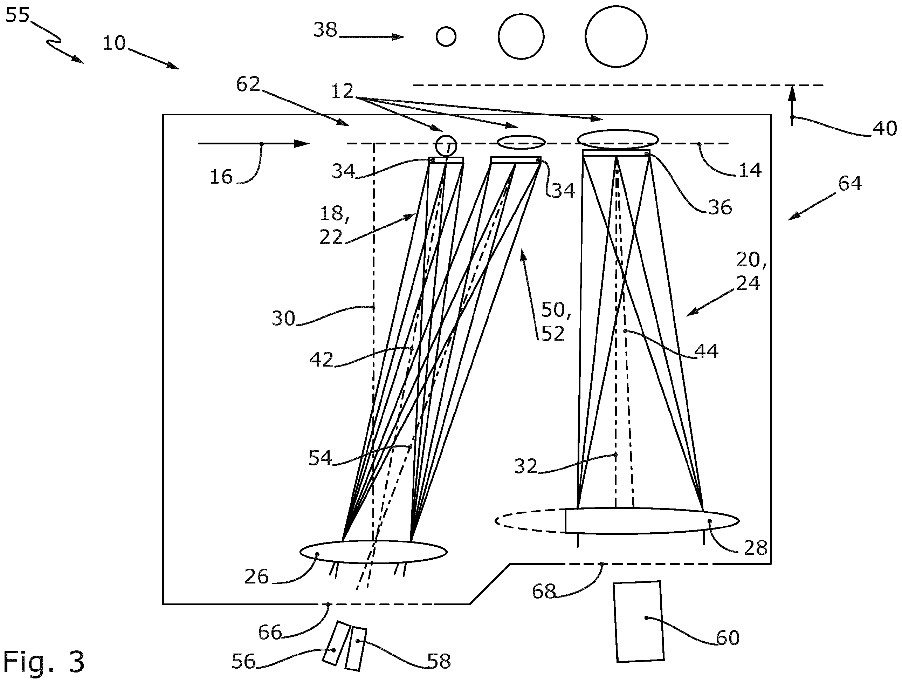

**Fig. 3** zeigt eine zweite Ausführungsform einer erfindungsgemäßen Fokussiereinrichtung 10 als Teil einer EUV-Strahlerzeugungsvorrichtung **55.** Der Aufbau der Fokussiereinrichtung 10 entspricht bis auf die nachfolgend diskutierten Abweichungen dem Aufbau der bekannten Fokussiereinrichtung 10 gemäß Fig. 2, auf den zur Vermeidung von Wiederholungen Bezug genommen wird.

Der in Fig. 3 gezeigte erste Laserstrahl 18 und optionale dritte Laserstrahl 50 trifft in einem Winkel von mehr als 2°, insbesondere von mehr als 4°, zur optischen Achse 30 des ersten fokussierenden Elements 26 auf das strahlformende Element 26. Dabei schneiden die Hauptachse 42 des ersten Strahlwegs 22 und die Hauptachse 54 des optionalen dritten Strahlwegs 52 die optische Achse 30 des ersten fokussierenden Elements 26 im ersten fokussierenden Element 26. Die Hauptachsen 42, 54 sind im ersten fokussierenden Element 26 mithin unversetzt zur optischen Achse 30 des ersten fokussierenden Elements 26. Hierdurch entsteht eine leichte Verzerrung der Abbildung 38 (sowie Coma im Fernfeld). Die Strahlwege 22, 52 weisen jedoch auch in dieser Ausführungsform die erfindungsgemäße gemeinsame bzw. parallele Bildebene in der Ebene, welche die Flugbahn des Targetmaterials umfsst auf.

In Fig. 3 ist schematisch eine erste Strahlquelle **56** zur Erzeugung des ersten Laserstrahls 18, eine zweite Strahlquelle **58** zur Erzeugung des zweiten Laserstrahls 20 und eine optionale dritte Strahlquelle **60** zur Erzeugung des dritten Laserstrahls 50 dargestellt.

In Fig. 3 ist weiterhin erkennbar, dass das Targetmaterial 12 in einen Zielbereich **62** einer Vakuumkammer **64** eingebracht ist. Die Vakuumkammer 64 kann eine erste Öffnung **66** zum Eintritt des ersten Laserstrahls 18 bzw. ersten Strahlwegs 22 aufweisen. Auch der optionale dritte Laserstrahl 50 bzw. dritte Strahlweg 52 kann durch die erste Öffnung 66 in die Vakuumkammer 64 eintreten. Die Vakuumkammer 64 kann alternativ oder zusätzlich dazu eine zweite Öffnung **68** zum Eintritt des zweiten Laserstrahls 20 bzw. zweiten Strahlwegs 24 aufweisen.

Unter Vornahme einer Zusammenschau aller Figuren der Zeichnung betrifft die Erfindung zusammenfassend eine Fokussiereinrichtung 10, insbesondere zur Erzeugung von EUV-Strahlung. Die Fokussiereinrichtung 10 ist dazu ausgebildet, Targetmaterial 12 auf einer Targetebene 14 zu beleuchten. Die Fokussiereinrichtung 10 weist zumindest zwei strahlformende Elemente 26, 28 auf, deren optische Achsen 30, 32 senkrecht auf der Targetebene 14 stehen. Hierdurch wird die Bildebene von Laserstrahlen 18, 20, die durch die fokussierenden Elemente 26, 28 geleitet werden, parallel zur Targetebene 14 ausgerichtet. Dies ermöglicht die effiziente Bestrahlung des Targetmaterials 12. Eine vollständig verzerrungsfreie Abbildung zumindest eines Laserstrahls 18, 20 kann durch eine Versetzung der Hauptachse dieses Laserstrahls 18, 20 zur optischen Achse 30, 32 des fokussierenden Elements 26, 28 erreicht werden, durch das dieser Laserstrahl 18, 20 geleitet wird. Durch eines der fokussierenden Elemente 26, 28 kann ein dritter Laserstrahl 50 zur Zwischenbestrahlung des Targetmaterials 12 geleitet werden.

### Bezugszeichenliste

- 10: Fokussiereinrichtung
- 12: Targetmaterial
- 14: Targetebene
- 16: Flugrichtung
- 18: erster Laserstrahl
- 20: zweiter Laserstrahl
- 22: erster Strahlweg
- 24: zweiter Strahlweg
- 26: erstes fokussierendes Element
- 28: zweites fokussierendes Element
- 30: optische Achse des ersten fokussierenden Elements 26
- 32: optische Achse des zweiten fokussierenden Elements 28
- 34: Fokusebene des ersten fokussierenden Elements 26
- 36: Fokusebene des zweiten fokussierenden Elements 28
- 38: Abbildungen
- 40: Blickrichtung
- 42: Hauptachse des ersten Strahlwegs 22
- 44: Hauptachse des zweiten Strahlwegs 24
- 46: Umlenkspiegel
- 48: Umlenkspiegel
- 50: dritter Laserstrahl
- 52: dritter Strahlweg
- 54: Hauptachse des dritten Strahlwegs 52
- 55: EUV-Strahlerzeugungsvorrichtung
- 56: erste Strahlquelle
- 58: zweite Strahlquelle
- 60: dritte Strahlquelle
- 62: Zielbereich
- 64: Vakuumkammer
- 66: erste Öffnung der Vakuumkammer 62
- 68: zweite Öffnung der Vakuumkammer 62

## Patentansprüche

1. Fokussiereinrichtung (10) zur Fokussierung von mindestens zwei Laserstrahlen auf ein sich bewegendes Targetmaterial (12) in einem Zielbereich (62), insbesondere zur Erzeugung von EUV-Strahlung, aufweisend:
a) Ein erstes fokussierendes Element (26) zur Fokussierung eines ersten Laserstrahls (18) auf das Targetmaterial (12) an einer ersten Position im Zielbereich (62);
b) ein zweites fokussierendes Element (28) zur Fokussierung eines zweiten Laserstrahls (20) auf das Targetmaterial (12) an einer zweiten Position im Zielbereich (62);
c) das erste fokussierende Element (26) und das zweite fokussierende Element (28) näherungsweise parallele oder deckungsgleiche optische Achsen (30, 32) aufweisen;
**dadurch gekennzeichnet, dass**
die Fokussiereinrichtung eingerichtet ist,
d) den ersten Laserstrahl (18) entlang einer ersten Hauptachse (42) zwischen dem ersten fokussierenden Element (26) und dem Zielbereich (62) zu führen, wobei die erste Hauptachse (42) versetzt und/oder verkippt zur optischen Achse (30) des ersten fokussierenden Elements (26) ist; und/oder
e) den zweiten Laserstrahl (20) entlang einer zweiten Hauptachse (44) zwischen dem zweiten fokussierenden Element (28) und dem Zielbereich (62) zu führen und wobei die zweite Hauptachse (44) versetzt und/oder verkippt zur optischen Achse (32) des zweiten fokussierenden Elements (28) ist.

2. Fokussiereinrichtung nach Anspruch 1, bei der das erste strahlformende Element (26) in Form eines Ausschnitts eines rotationssymmetrisch zu seiner optischen Achse (30) ausgebildeten fokussierenden Elements ausgebildet ist; und/oder
das zweite strahlformende Element (28) in Form eines Ausschnitts eines rotationssymmetrisch zu seiner optischen Achse (32) ausgebildeten fokussierenden Elements ausgebildet ist.

3. Fokussiereinrichtung nach einem der vorhergehenden Ansprüche, bei der die optischen Achsen (30, 32) des ersten fokussierenden Elements (26) und des zweiten fokussierenden Elements (28) zueinander um weniger als 3mm versetzt sind.

4. Fokussiereinrichtung nach einem der vorhergehenden Ansprüche, bei der das erste strahlformende Element (26) in Form einer Linse oder eines Spiegels ausgebildet ist; und/oder
das zweite strahlformende Element (28) in Form einer Linse oder eines Spiegels ausgebildet ist.

5. Fokussiereinrichtung nach einem der vorhergehenden Ansprüche, bei der dem ersten fokussierenden Element (26) in Strahlrichtung gesehen eine Doppelspiegelanordnung nachgeordnet ist; und/oder
bei der dem zweiten fokussierenden Element (28) in Strahlrichtung gesehen eine Doppelspiegelanordnung nachgeordnet ist.

6. Fokussiereinrichtung nach einem der vorhergehenden Ansprüche, welche eingerichtet ist, einen dritten Laserstrahl (50) entlang einer dritten Hauptachse (54) in den Zielbereich (62) von dem ersten strahlformende Element (26) zu führen, wobei die dritte Hauptachse (54) einen spitzen Winkel von mehr als 2°, insbesondere von mehr als 4°, zur ersten Hauptachse (42) des ersten Laserstrahls (18) einnimmt.

7. EUV-Strahlerzeugungsvorrichtung (55) mit einer Vakuumkammer (64), in die zur Erzeugung von EUV-Strahlung das Targetmaterial (12) in den Zielbereich (62) einbringbar ist, der Fokussiereinrichtung zur Fokussierung der mindestens zwei Laserstrahlen auf das sich bewegende Targetmaterial (12) in dem Zielbereich (62) nach einem der vorhergehenden Ansprüche, sowie mit einer ersten Strahlquelle (56) zur Erzeugung des ersten Laserstrahls (18) und einer zweiten Strahlquelle (58) zur Erzeugung des zweiten Laserstrahls (20).

8. EUV-Strahlerzeugungsvorrichtung nach Anspruch 7, bei der der erste Laserstrahl (18) eine erste Wellenlänge aufweist und der zweite Laserstrahl (20) eine zweite Wellenlänge aufweist, die sich von der ersten Wellenlänge unterscheidet.

9. EUV-Strahlerzeugungsvorrichtung nach Anspruch 8, bei der die erste Wellenlänge zwischen 500 und 1200nm beträgt und die zweite Wellenlänge zwischen 8µm und 12µm beträgt.

10. EUV-Strahlerzeugungsvorrichtung nach einem der Ansprüche 7 bis 9, bei der der erste Laserstrahl (18) gepulst ist und/oder der zweite Laserstrahl (20) gepulst ist.

11. EUV-Strahlerzeugungsvorrichtung nach einem der Ansprüche 7 bis 10, sowie einer Fokussiereinrichtung nach Anspruch 6 mit einer dritten Strahlquelle (60) zur Erzeugung des dritten Laserstrahls (50).

12. EUV-Strahlerzeugungsvorrichtung nach Anspruch 11, bei der der dritte Laserstrahl (50) gepulst und/oder eine andere Wellenlänge als der zweite Laserstrahl (20) und/oder eine andere Polarisation als der zweite Laserstrahl (20) hat.

## Claims

1. Focusing device (10) for focusing at least two laser beams onto a moving target material (12) in a target area (62), in particular for generating EUV radiation, comprising:
a) a first focusing element (26) for focusing a first laser beam (18) onto the target material (12) at a first position in the target area (62);
b) a second focusing element (28) for focusing a second laser beam (20) onto the target material (12) at a second position in the target area (62);
c) the first focusing element (26) and the second focusing element (28) having approximately parallel or congruent optical axes (30, 32);
**characterized in that**
the focusing device is configured
d) to guide the first laser beam (18) along a first main axis (42) between the first focusing element (26) and the target area (62), wherein the first main axis (42) is offset and/or tilted with respect to the optical axis (30) of the first focusing element (26); and/or
e) to guide the second laser beam (20) along a second main axis (44) between the second focusing element (28) and the target area (62) and wherein the second main axis (44) is offset and/or tilted with respect to the optical axis (32) of the second focusing element (28).

2. The focusing device according to claim 1, wherein
the first beam-shaping element (26) is formed in the shape of a cutout of a focusing element formed rotationally symmetrically to its optical axis (30), and/or
the second beam-shaping element (28) is formed in the shape of a cutout of a focusing element formed rotationally symmetrical to its optical axis (32).

3. The focusing device according to any one of the preceding claims, wherein the optical axes (30, 32) of the first focusing element (26) and of the second focusing element (28) are offset from each other by less than 3mm.

4. The focusing device according to any one of the preceding claims, wherein
the first beam-shaping element (26) is formed in the shape of a lens or a mirror, and/or
the second beam-shaping element (28) is formed in the shape of a lens or a mirror.

5. The focusing device according to any one of the preceding claims, wherein a double mirror arrangement is arranged downstream of the first focusing element (26) as seen in the beam direction; and/or
wherein a double mirror arrangement is arranged downstream of the second focusing element (28) as seen in the beam direction.

6. The focusing device according to any one of the preceding claims, which is configured to guide a third laser beam (50) along a third main axis (54) into the target area (62) of the first beam-shaping element (26), wherein the third main axis (54) forms an acute angle of more than 2°, in particular more than 4°, with respect to the first main axis (42) of the first laser beam (18).

7. EUV beam generating apparatus (55) comprising
a vacuum chamber (64) into which the target material (12) can be introduced into the target area (62) for generating EUV radiation,
the focusing device for focusing the at least two laser beams onto the moving target material (12) in the target area (62) according to any of the preceding claims, and
a first beam source (56) for generating the first laser beam (18) and a second beam source (58) for generating the second laser beam (20).

8. The EUV beam generating apparatus according to claim 7, wherein the first laser beam (18) has a first wavelength and the second laser beam (20) has a second wavelength, which is different from the first wavelength.

9. The EUV beam generating apparatus according to claim 8, wherein the first wavelength is between 500 and 1200nm and the second wavelength is between 8µm and 12µm.

10. The EUV beam generating apparatus according to any one of the claims 7 to 9, wherein the first laser beam (18) is pulsed and/or the second laser beam (20) is pulsed.

11. EUV beam generating apparatus according to any one of the claims 7 to 10, as well as a focusing device according to claim 6 comprising a third beam source (60) for generating the third laser beam (50).

12. EUV beam generating apparatus according to claim 11, wherein the third laser beam (50) is pulsed and/or has a different wavelength than the second laser beam (20) and/or a different polarization than the second laser beam (20).

## Revendications

1. Dispositif de focalisation (10) pour focaliser au moins deux faisceaux laser sur un matériau cible en mouvement (12) dans une zone visée(62), en particulier afin de générer un rayonnement EUV, comprenant :
a) un premier élément de focalisation (26) pour focaliser un premier faisceau laser (18) sur le matériau cible (12) dans une première position dans la zone visée (62) ;
b) un second élément de focalisation (28) pour focaliser un deuxième faisceau laser (20) sur le matériau cible (12) dans une position dans la zone visée (62) ;
c) le premier élément de focalisation (26) et le second élément de focalisation (28) présentent des axes optiques (30, 32) approximativement parallèles ou coïncidents ;
**caractérisé en ce que**
le dispositif de focalisation est configuré pour,
d) guider le premier faisceau laser (18) le long d'un premier axe principal (42) entre le premier élément de focalisation (26) et la zone visée (62), le premier axe principal (42) étant décalé et/ou incliné par rapport à l'axe optique (30) du premier élément de focalisation (26) ; et/ou
e) guider le deuxième faisceau laser (20) le long d'un deuxième axe principal (44) entre le second élément de focalisation (28) et la zone visée (62) et le deuxième axe principal (44) étant décalé et/ou incliné par rapport à l'axe optique (32) du second élément de focalisation (28).

2. Dispositif de focalisation selon la revendication 1, le premier élément de formation de faisceau (26) étant réalisé sous la forme d'une découpe d'un élément de focalisation réalisé symétrique en rotation par rapport à son axe optique (30), et/ou
le second élément de formation de faisceau (28) étant conçu sous la forme d'une découpe d'un élément de focalisation formé symétrique en rotation par rapport à son axe optique (32).

3. Dispositif de focalisation selon l'une quelconque des revendications précédentes, les axes optiques (30, 32) du premier élément de focalisation (26) et du second élément de focalisation (28) étant décalés l'un par rapport à l'autre de moins de 3 mm.

4. Dispositif de focalisation selon l'une quelconque des revendications précédentes, le premier élément de formation de faisceau (26) étant réalisé sous la forme d'une lentille ou d'un miroir ; et/ou
le second élément de formation de faisceau (28) étant réalisé sous la forme d'une lentille ou d'un miroir.

5. Dispositif de focalisation selon l'une quelconque des revendications précédentes, un agencement à deux miroirs étant agencé en aval du premier élément de focalisation (26) en regardant dans la direction de faisceau ; et/ou
un agencement à deux miroirs étant agencé en aval du second élément de focalisation (28) en regardant dans la direction de faisceau.

6. Dispositif de focalisation selon l'une quelconque des revendications précédentes, qui est agencé pour guider un troisième faisceau laser (50) le long d'un troisième axe principal (54) dans la zone visée (62) à partir du premier élément de formation de faisceau (26), le troisième axe principal (54) formant un angle aigu de plus de 2°, en particulier de plus de 4°, avec le premier axe principal (42) du premier faisceau laser (18).

7. Dispositif de génération de faisceau EUV (55) comprenant une chambre à vide (64) dans laquelle le matériau cible (12) peut être introduit dans la zone visée (62) pour générer un rayonnement EUV, le dispositif de focalisation pour focaliser les au moins deux faisceaux laser sur le matériau cible en mouvement (12) dans la zone visée (62) selon l'une quelconque des revendications précédentes, ainsi qu'une première source de faisceau (56) pour générer le premier faisceau laser (18) et une deuxième source de faisceau (58) pour générer le deuxième faisceau laser (20).

8. Dispositif de génération de faisceau EUV selon la revendication 7, le premier faisceau laser (18) présentant une première longueur d'onde et le deuxième faisceau laser (20) présentant une seconde longueur d'onde qui est différente de la première longueur d'onde.

9. Dispositif de génération de faisceau EUV selon la revendication 8, la première longueur d'onde étant comprise entre 500 et 1 200 nm et la seconde longueur d'onde étant comprise entre 8 µm et 12 µm.

10. Dispositif de génération de faisceau EUV selon l'une quelconque des revendications 7 à 9, dans lequel le premier faisceau laser (18) est pulsé et/ou le deuxième faisceau laser (20) est pulsé.

11. Dispositif de génération de faisceau EUV selon l'une quelconque des revendications 7 à 10, ainsi qu'un dispositif de focalisation selon la revendication 6 avec une troisième source de faisceau (60) pour générer le troisième faisceau laser (50).

12. Dispositif de génération de faisceau EUV selon la revendication 11, dans lequel le troisième faisceau laser (50) est pulsé et/ou présente une longueur d'onde différente de celle du deuxième faisceau laser (20) et/ou une polarisation différente de celle du deuxième faisceau laser (20).
